(19) Europäisches Patentamt
European Patent Office
Office européen des brevets

(11) EP 4 644 450 A1

(12) EUROPEAN PATENT APPLICATION
published in accordance with Art. 153(4) EPC

(43) Date of publication:
**05.11.2025 Bulletin 2025/45**

(21) Application number: **24770648.4**

(22) Date of filing: **05.03.2024**

(51) International Patent Classification (IPC):
***C08G 18/38*** *(2006.01)* ***B32B 7/023*** *(2019.01)*
***C08G 18/08*** *(2006.01)* ***C08K 3/38*** *(2006.01)*
***C08K 5/17*** *(2006.01)* ***C08K 5/524*** *(2006.01)*
***C08L 75/04*** *(2006.01)*

(52) Cooperative Patent Classification (CPC):
**B32B 7/023; C08G 18/08; C08G 18/38; C08K 3/38; C08K 5/17; C08K 5/524; C08L 75/04**

(86) International application number:
**PCT/JP2024/008297**

(87) International publication number:
**WO 2024/190538 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023 JP 2023041165**

(71) Applicant: **Mitsui Chemicals, Inc.**
**Tokyo 104-0028 (JP)**

(72) Inventor: **RIBEIRO, Nigel**
**Omuta-shi, Fukuoka 836-8610 (JP)**

(74) Representative: **Hoffmann Eitle**
**Patent- und Rechtsanwälte PartmbB**
**Arabellastraße 30**
**81925 München (DE)**

(54) **COMPOSITION, COMPOSITION KIT, CURED PRODUCT, LAMINATE, AND METHOD FOR PRODUCING CURED PRODUCT**

(57) A composition, including: a base generator (a); a polymerizable compound including at least one selected from the group consisting of a polyiso(thio)cyanate compound (b1) and a polythiol compound (c1); and a stabilizer (S).



Processed by Luminess, 75001 PARIS (FR)

## Description

### Technical Field

The present invention relates to a composition, a composition kit, a cured product, a laminate, and a method for producing a cured product.

### Background Art

High refractive plastic materials are increasingly used for optical components, such as lenses for eyewear, for reasons such as their being light in weight, break-proof and dyeable as compared with inorganic materials such as glass. Examples of the plastic materials for optical components include acrylic resin, polycarbonate and thiourethane resin, and thiourethane resin is known as a plastic material with which a high degree of refractive index is obtained (see, for example, Patent Document 1).

Products made of thiourethane resin are generally produced by a cast polymerization method. Specifically, the products are obtained by injecting a composition as a raw material into a space between a pair of molds that are disposed at a certain clearance, and curing the composition by heating.

Patent Document 1: Japanese Patent Application Laid-Open No. 2019-15922

### Summary of the Invention

### Problem to be Solved by the Invention

The existing methods for producing thiourethane resin still have problems to be solved in terms of handling, such as it being difficult to control the quality of the composition or the cured product, in addition to requiring a long period of time for heating for the composition to cure.

In view of the foregoing, the purpose of an embodiment of the present disclosure is to provide a composition that is capable of forming thiourethane resin that can be readily handled; and a composition kit, a cured product, a laminate and a method for producing a cured product in which the foregoing composition is used.

### Means for Solving the Problem

The means for solving the problem include the following embodiments.

<1> A composition, comprising:

a base generator (a);
a polymerizable compound comprising at least one selected from the group consisting of a polyiso(thio)cyanate compound (b1) and a polythiol compound (c1); and
a stabilizer (S).

<2> The composition according to <1>, wherein the polymerizable compound comprises the polyiso(thio)cyanate compound (b1) and the polythiol compound (c1).
<3> The composition according to <2>, wherein a mass ratio (b1/c1) of the polyiso(thio)cyanate compound (b1) and the polythiol compound (c1) in the polymerizable compound is from 99/1 to 1/99.
<4> The composition <2> or <3>, comprising a thiourethane compound that is a reaction product of the polyiso(thio) cyanate compound (b1) and the polythiol compound (c1).
<5> The composition according to any one of <1> to <4>, wherein the polyiso(thio)cyanate compound (b1) comprises at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl) methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.
<6> The composition according to any one of <1> to <5>, wherein the polythiol compound (c1) comprises at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.

<7> The composition according to any one of <1> to <6>, wherein the base generator (a) comprises at least one selected from compounds represented by the following Formula (1) to Formula (4):

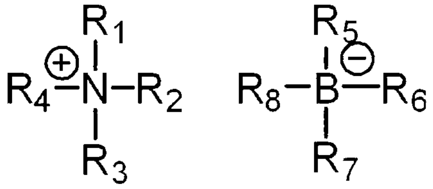

(1)

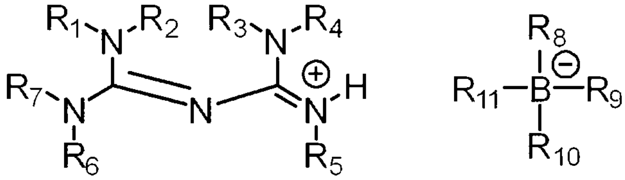

(2)

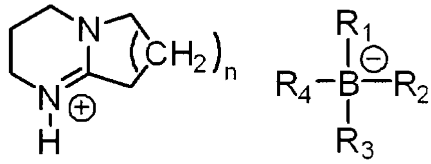

(3)

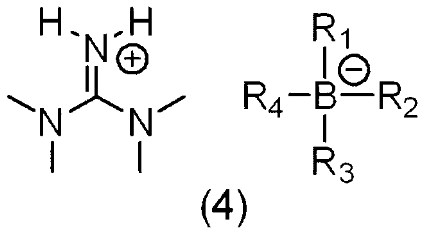

(4)

wherein, in Formula (1), each of $R_1$ to $R_4$ independently represents an alkyl group with a carbon number from 1 to 8, and each of $R_5$ to $R_8$ independently represents an alkyl group with a carbon number from 1 to 8, a phenyl group, a naphthyl group, an anthracenyl group or a phenanthryl group;

in Formula (2), each of $R_1$ to $R_7$ independently represents an alkyl group with a carbon number from 1 to 8 or a cycloalkyl group with a carbon number from 3 to 8, and each of $R_8$ to $R_{11}$ independently represents an alkyl group with a carbon number from 1 to 8, a phenyl group, a naphthyl group, an anthracenyl group or a phenanthryl group;

in Formula (3), n represents an integer from 1 to 3, and each of $R_1$ to $R_4$ independently represents an alkyl group with a carbon number from 1 to 8, a phenyl group, a naphthyl group, an anthracenyl group or a phenanthryl group;

in Formula (4), each of $R_1$ to $R_4$ independently represents an alkyl group with a carbon number from 1 to 8, a phenyl group, a naphthyl group, an anthracenyl group or a phenanthryl group; and

in Formula (1) to Formula (4), the phenyl group, the naphthyl group, the anthracenyl group or the phenanthryl group may be substituted by a halogen atom, an alkyl group, an aryl group, an alkenyl group, a cycloalkyl group or a heterocyclic group.

<8> The composition according to any one of <1> to <7>, wherein the stabilizer (S) comprises either an acid with a pKa of from 0.2 to less than 2.0 or a phosphite ester.

<9> The composition according to any one of <1> to <8>, wherein the stabilizer (S) comprises at least one selected from the group of an acid with a pKa of less than 2.0 and a phosphite ester.

<10> The composition according to any one of <1> to <9>, further comprising a tin-containing metal catalyst, wherein a content of the tin-containing metal catalyst is from 0.001 parts by mass to 0.05 parts by mass in a case in which a total mass of the polymerizable compound is 100 parts by mass.

<11> The composition according to any one of <1> to <10>, further comprising an ultraviolet absorber (e).

<12> The composition according to any one of <1> to <11>, further comprising a polyether-modified silicone compound (d).

<13> A composition kit, comprising:

a first composition as the composition according to any one of <1> to <12>; and

a second composition comprising a polymerizable compound that includes at least one selected from the group consisting of the polyiso(thio)cyanate compound (b2) and the polythiol compound (c2).

<14> The composition kit according to <13>, wherein the second composition comprises either the polyiso(thio)cyanate compound (b2) or the polythiol compound (c2).

<15> A cured product of a mixture of the first composition and the second composition included in the composition kit

according to <13> or <14>.

<16> The cured product according to <15>, having a refractive index of from 1.50 to 1.80.

<17> A laminate, comprising the cured product according to <15> or <16> and a substrate.

<18> The laminate according to <17>, further comprising a functional film.

<19> The laminate according to <18>, wherein the functional film comprises at least one selected from the group consisting of a polarizing film, a phase difference film, a gas barrier film, an electroconductive film, an insulating film and a lightguide film.

<20> The laminate according to <18> or <19>, wherein the cured product is in direct contact with at least a portion of the functional film.

<21> A method of producing a cured product, the method comprising:

obtaining a mixture of the first composition and the second composition included in the composition kit according to <13> or <14>; and
applying ultraviolet rays or visible light to the mixture.

<22> The method of producing a cured product according to <21>, wherein the mixture is obtained using a two-component dispenser.

<23> The method of producing a cured product according to <21> or <22>, further comprising storing the composition kit at room temperature.

Effect of the Invention

According to an embodiment of the present disclosure, it is possible to provide a composition that is capable of forming thiourethane resin that can be readily handled; and a composition kit, a cured product, a laminate and a method for producing a cured product in which the foregoing composition is used.

Embodiments for Implementing the Invention

In the present disclosure, any numerical range described using the expression "from ... to ..." represents a range in which numerical values described before and after the "to" are included in the range as a minimum value and a maximum value, respectively.

In the present disclosure, each component may include plural kinds of substances corresponding to the component. In a case in which plural kinds of substances corresponding to each component are present in a composition, the content of each component refers to the total content of the plural kinds of substances present in the composition, unless otherwise specified.

In a numerical range described in a stepwise manner, in the present disclosure, an upper limit value or a lower limit value described in one numerical range may be replaced with an upper limit value or a lower limit value in another numerical range described in a stepwise manner. Further, in a numerical range described in the present disclosure, the upper limit value or the lower limit value in the numerical range may be replaced with a value shown in the Examples.

<Composition>

The composition of the present disclosure includes:

a base generator (a);
a polymerizable compound including at least one selected from the group consisting of a polyiso(thio)cyanate compound (b1) and a polythiol compound (c1); and
a stabilizer (S).

The composition of the present disclosure includes at least one selected from the group consisting of a polyiso(thio)cyanate compound (b1) and a polythiol compound (c1). Namely, the composition of the present disclosure is used to form a cured product obtained by a polymerization reaction of the polyiso(thio)cyanate compound and the polythiol compound (i.e., thiourethane resin). The thiourethane resin is suitable for the purposes in which a high degree of refractive index is required, such as optical members.

Further, the composition of the present invention includes a base generator. Conventional thiourethane resins are produced by causing a polymerization reaction of the polyiso(thio)cyanate compound (b1) and the polythiol compound (c1) by heating the same. In the composition of the present disclosure, the polymerization reaction of the polyiso(thio) cyanate compound (b1) and the polythiol compound (c1) is caused by application of light. Namely, the composition of the

present disclosure is much shorter in the time period for curing as compared with the conventional composition in which the polymerization reaction is caused by heating.

Further, the composition of the present disclosure includes a stabilizer. Since the composition of the present disclosure includes a base generator together with the polymerizable compounds, a polymerization reaction of the polymerizable compounds may be caused during storage of the composition. By including the stabilizer together with the base generator, the composition of the present disclosure suppresses the polymerization reaction of the polymerizable compounds.

In other words, the composition of the present disclosure enables the polymerizable compounds and the base generator to exist together in the composition by including the stabilizer. By including the polymerizable compounds and the base generator, the composition enables the user to skip the process to add the base generator to the polymerizable compound, thereby achieving a remarkable improvement in handleability of the composition.

The composition of the present disclosure may include either the polyiso(thio)cyanate compound (b1) or the polythiol compound (c1), or may include both of the same.

When the composition includes the polyiso(thio)cyanate compound (b1) and the polythiol compound (c1), the mass ratio (c1/b1) of the polythiol compound (c1) to the polyiso(thio)cyanate compound (b1) is not particularly limited, and may be selected from a range of from 99/1 to 1/99.

When the composition includes the polyiso(thio)cyanate compound (b1) and the polythiol compound (c1) as the polymerizable compounds, the mass ratio of the polymerizable compounds in the composition may be determined such that the following Condition A or the Condition B is satisfied:

Condition A: the mass ratio (b1/c1) of the polyiso(thio)cyanate compound (b1) to the polythiol compound (c1) is in a range of from 99/1 to 70/30, from 99/1 to 75/25, or from 95/5 to 80/20.

Condition B: the mass ratio (b1/c1) of the polyiso(thio)cyanate compound (b1) to the polythiol compound (c1) is in a range of from 1/99 to 30/70, from 1/99 to 25/75, or from 5/95 to 20/80.

When the composition includes the polyiso(thio)cyanate compound (b1) and the polythiol compound (c1) as the polymerizable compounds, part of the polyiso(thio)cyanate compound (b1) and the polythiol compound (c1) may react with each other to generate a thiourethane compound in the composition. Namely, the composition may include a thiourethane compound as a reaction product of the polyiso(thio)cyanate compound (b1) and the polythiol compound (c1).

When the composition of the present disclosure is used as the first composition used in the composition kit as described later, the mass ratio (c1/b1) is preferably determined in consideration of the mass ratio (c1+b2/b1+c2) of the polythiol compound (c1+c2) to the polyiso(thio)cyanate compound (b1+b2) in the mixture of the first composition and the second composition.

From the viewpoint of photocurability and adhesiveness of the cured product, the total content of the polymerizable compounds included in the composition with respect to the total mass of the composition is preferably 20% by mass or more, more preferably 30% by mass or more, further preferably 40% by mass or more, particularly preferably 50% by mass or more, and yet further preferably 60% by mass or more.

The total mass of the polymerizable compounds included in the composition with respect to the total mass of the composition may be 99.9% by mass or less, or 99.8% by mass or less.

<Base generator (a)>

The composition of the present disclosure includes a base generator (a).

In the present disclosure, the base generator refers to a compound that causes the release of a base upon application of at least one of optical energy or thermal energy, such as electromagnetic waves.

By including the base generator (a) in the composition, it is possible to improve the photocurability of the polymerizable compounds. Further, in a case in which thermal curing is performed as necessary, it is possible to improve the thermal curability of the polymerizable compounds.

Examples of the base generator (a) include the compounds represented by the following Formula (1) to Formula (4).

(Compounds represented by Formula (1))

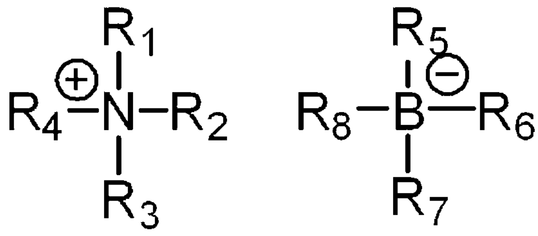

(1)

In Formula (1), each of $R_1$ to $R_4$ independently represents an alkyl group with a carbon number from 1 to 8, and each of $R_5$ to $R_8$ independently represents an alkyl group with a carbon number from 1 to 8, a phenyl group, a naphthyl group, an anthracenyl group or a phenanthryl group. The phenyl group, the naphthyl group, the anthracenyl group or the phenanthryl group may be substituted by a halogen atom, an alkyl group, an aryl group, an alkenyl group, a cycloalkyl group or a heterocyclic group.

In Formula (1), $R_1$ to $R_4$ are preferably the same.

$R_1$ to $R_4$ are preferably an alkyl group with a carbon number from 2 to 5, more preferably a linear alkyl group, further preferably a n-butyl group.

In Formula (1), $R_8$ is preferably an alkyl group with a carbon number from 2 to 5, more preferably a linear alkyl group, further preferably an n-butyl group.

$R_5$ to $R_7$ are preferably the same.

$R_5$ to $R_7$ are preferably a phenyl group, a butylphenyl group or a naphthyl group, more preferably a phenyl group, a 4-tert-butylphenyl group, a 1-naphthyl group or a 4-methyl-1-naphthyl group.

When $R_5$ to $R_7$ include an aromatic ring, the aromatic ring may be substituted by a substituent such as an alkyl group or an aryl group.

The compound represented by Formula (1) is preferably at least one selected from the group consisting of tetra(n-butyl)ammonium=n-butyltriphenylborate, tetra(n-butyl)ammonium=n-butyltri(4-tert-butylphenyl)borate, tetra(n-butyl)ammonium=n-butyltri(1-naphthyl)borate and tetra(n-butyl)ammonium=n-butyltri(4-methyl-1-naphthyl)borate. The "=" in the compound name represents an ionic bond.

From the viewpoint of a balance of solubility, polymerizability and pot life of the composition, the compound represented by Formula (1) is preferably at least one selected from the group consisting of tetra(n-butyl)ammonium=n-butyltriphenylborate and tetra(n-butyl)ammonium=n-butyltri(1-naphthyl)borate.

Specific examples of the compound represented by Formula (1) include the following compounds, while the present disclosure is not limited thereto.

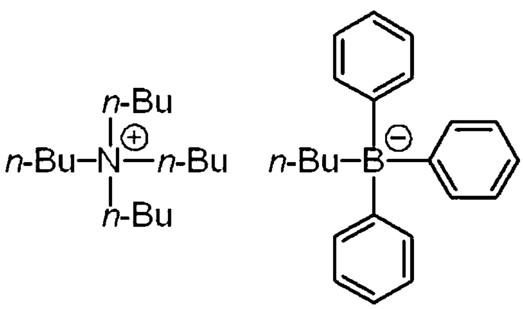

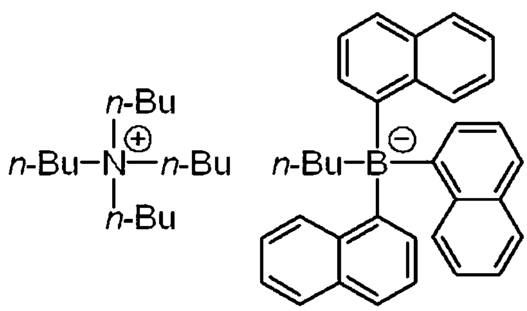

(Compound represented by Formula (2))

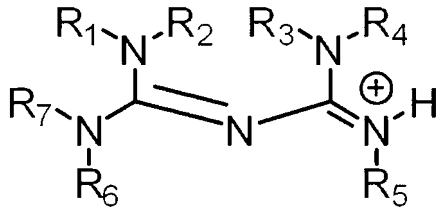 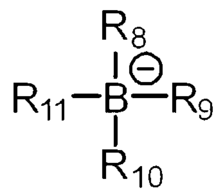

(2)

In Formula (2), each of $R_1$ to $R_7$ independently represents an alkyl group with a carbon number from 1 to 8 or a cycloalkyl group with a carbon number from 3 to 8, and each of $R_8$ to $R_{11}$ independently represents an alkyl group with a carbon number from 1 to 8, a phenyl group, a naphthyl group, an anthracenyl group or a phenanthryl group. The phenyl group, the naphthyl group, the anthracenyl group or the phenanthryl group may be substituted by a halogen atom, an alkyl group, an aryl group, an alkenyl group, a cycloalkyl group or a heterocyclic group.

In Formula (2), $R_4$ and $R_5$ are preferably a cycloalkyl group with a carbon number from 3 to 8, more preferably a cycloalkyl group with a carbon number from 4 to 7.

The cycloalkyl group is preferably a cyclohexyl group.

$R_1$ to $R_3$, $R_6$ and $R_7$ are preferably an alkyl group with a carbon number from 1 to 8, more preferably an alkyl group with a carbon number from 1 to 5, further preferably a methyl group.

$R_1$ to $R_3$, $R_6$ and $R_7$ are preferably an alkyl group with a carbon number from 1 to 8, more preferably an alkyl group with a carbon number from 1 to 5, further preferably a methyl group.

$R_1$ to $R_3$, $R_6$ and $R_7$ are preferably a linear alkyl group.

In Formula (2), $R_{11}$ is preferably an alkyl group with a carbon number from 2 to 5, more preferably a linear alkyl group, further preferably an n-butyl group,

$R_8$ to $R_{10}$ are preferably the same.

$R_8$ to $R_{10}$ are preferably a phenyl group, a butylphenyl group or a naphthyl group, more preferably a phenyl group, a 4-tert-butylphenyl group, a 1-naphthyl group or a 4-methyl-1-naphthyl group.

When $R_8$ to $R_{10}$ include an aromatic ring, the aromatic ring may be substituted by a substituent such as an alkyl group or an aryl group.

In formula (2), $R_8$ to $R_{10}$ are preferably the same.

When $R_8$ to $R_{10}$ are the same, $R_8$ to $R_{10}$ are preferably a phenyl group, a butylphenyl group or a naphthyl group, more preferably a phenyl group, a 4-tert-butylphenyl group, a 1-naphthyl group or a 4-methyl-1-naphthyl group.

When $R_8$ to $R_{10}$ are the same and include an aromatic ring, the aromatic ring may be substituted by a halogen atom, an alkyl group, an aryl group or the like, preferably by a halogen group, more preferably by a fluorine atom.

The compound represented by Formula (2) is preferably at least one selected from the group consisting of 1,2-dicyclohexyl-4,4,5,5-tetramethylbiguanidium=n-butyltriphenylborate, 1,2-dicyclohexyl-4,4,5,5-tetramethylbiguanidium=tetrakis(3-fluorophenyl)borate and 1,2-dicyclohexyl-4,4,5,5-tetramethylbiguanidium=butyltri(1-naphthyl)borate. The "=" in the compound name represents an ionic bond.

From the viewpoint of a balance of solubility, polymerizability and pot life of the composition, the compound represented by Formula (2) is more preferably at least one selected from the group consisting of 1,2-dicyclohexyl-4,4,5,5-tetramethylbiguanidium=n-butyltriphenylborate and 1,2-dicyclohexyl-4,4,5,5-tetramethylbiguanidium=tetrakis(3-fluorophenyl)borate.

Specific examples of the compound represented by Formula (2) include the following compounds, while the present disclosure is not limited thereto.

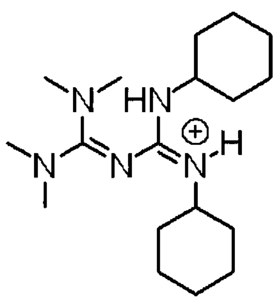 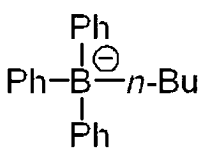 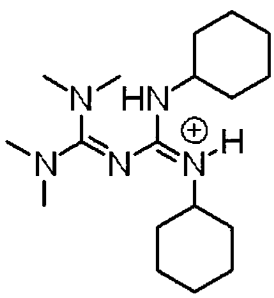 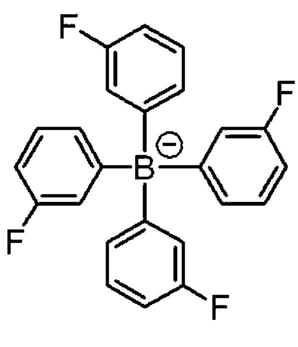

(Compound represented by Formula (3))

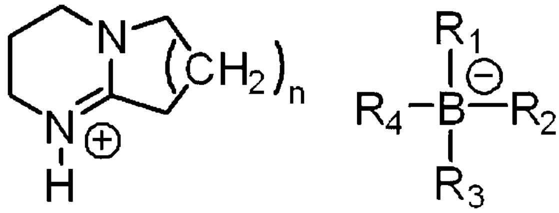

(3)

In Formula (3), n represents an integer from 1 to 3, and each of $R_1$ to $R_4$ independently represents an alkyl group with a carbon number from 1 to 8, a phenyl group, a naphthyl group, an anthracenyl group or a phenanthryl group. The phenyl group, the naphthyl group, the anthracenyl group or the phenanthryl group may be substituted by a halogen atom, an alkyl group, an aryl group, an alkenyl group, a cycloalkyl group or a heterocyclic group.

n is preferably 1 or 3.

$R_4$ is preferably an alkyl group with a carbon number from 2 to 5, more preferably a linear alkyl group, further preferably an n-butyl group.

$R_1$ to $R_3$ are preferably the same.

$R_1$ to $R_3$ are preferably a phenyl group, a butylphenyl group or a naphthyl group, more preferably a phenyl group, a 4-tert-butylphenyl group, 1-naphthyl group or a 4-methyl-1-naphtyl group.

When $R_1$ to $R_3$ include an aromatic ring, the aromatic ring may be substituted by a substituent such as an alkyl group or an aryl group.

It is also preferred that $R_1$ to $R_4$ in Formula (3) are the same.

When $R_1$ to $R_4$ in Formula (3) are the same, $R_1$ to $R_4$ are preferably a phenyl group, a butylphenyl group or a naphthyl group, more preferably a phenyl group, a 4-tert-butylphenyl group, 1-naphthyl group or a 4-methyl-1-naphtyl group.

When $R_1$ to $R_4$ are the same and include an aromatic ring, the aromatic ring is preferably substituted by a halogen atom, an alkyl group, an aryl group or the like, preferably by a halogen atom, more preferably by a fluorine atom.

The compound represented by Formula (3) is preferably at least one selected from the group consisting of diazabicycloundecenium=n-butyltriphenylborate, diazabicycloundecenium=tetrakis(3-fluorophenyl)borate, diazabicycloundecenium=butyltri(1-naphthyl)borate, diazabicycloundecenium=tetraphenylborate, diazabicyclononenium=n-butyltriphenylborate, diazabicyclononenium=tetrakis(3-fluorophenyl)borate, diazabicyclononenium=butyltri(1-naphthyl)borate and diazabicyclononenium=tetraphenylborate.

The "=" in the compound name represents an ionic bond.

Amond these compounds, the compound represented by Formula (3) is preferably at least one selected from the group consisting of diazabicycloundecenium=tetraphenylborate and diazabicyclononenium=tetraphenylborate.

(Compound represented by Formula (4))

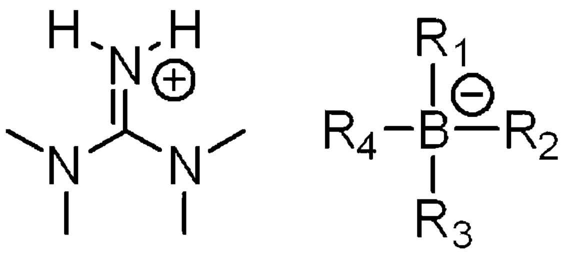

(4)

In Formula (4), each of $R_1$ to $R_4$ independently represents an alkyl group with a carbon number from 1 to 8, a phenyl group, a naphthyl group, an anthracenyl group or a phenanthryl group. The phenyl group, the naphthyl group, the anthracenyl group or the phenanthryl group may be substituted by a halogen atom, an alkyl group, an aryl group, an alkenyl group, a cycloalkyl group or a heterocyclic group.

$R_4$ is preferably an alkyl group with a carbon number from 2 to 5, more preferably a linear alkyl group, further preferably an n-butyl group.

$R_1$ to $R_3$ are preferably the same.

$R_1$ to $R_3$ are preferably a phenyl group, a butylphenyl group or a naphthyl group, more preferably a phenyl group, a 4-tert-butylphenyl group, a 1-naphthyl group or a 4-methyl-1-naphtyl group.

When $R_1$ to $R_3$ include an aromatic ring, the aromatic ring may be substituted by a substituent such as an alkyl group or an aryl group.

It is also preferred that $R_1$ to $R_4$ in Formula (4) are the same.

When $R_1$ to $R_4$ are the same, $R_1$ to $R_4$ are preferably a phenyl group, a butylphenyl group or a naphthyl group, more preferably a phenyl group, a 4-tert-butylphenyl group, a 1-naphthyl group or a 4-methyl-1-naphtyl group.

When $R_1$ to $R_4$ are the same and include an aromatic ring, the aromatic ring is preferably substituted by a halogen atom, an alkyl group, an aryl group or the like, preferably by a halogen atom, more preferably by a fluorine atom.

The compound represented by Formula (4) is preferably at least one selected from the group consisting of 1,1,3,3-tetramethylguanidium=n-butyltriphenylborate, 1,1,3,3-tetramethylguanidium=tetrakis(3-fluorophenyl)borate, 1,1,3,3-tetramethylguanidium=butyltri(1-naphthyl)borate and 1,1,3,3-tetramethylguanidium=tetraphenylborate. The "=" in the compound name represents an ionic bond.

Among these compounds, the compound represented by Formula (4) is preferably 1,1,3,3-tetramethylguanidium=tetraphenylborate.

From the viewpoint of promoting the photocuring, the content of the base generator (a) is preferably 0.01 parts by mass or more, more preferably 0.03 parts by mass or more, further preferably 0.05 parts by mass or more, in a case in which the total mass of the polymerizable compounds is 100 parts by mass.

From the viewpoint of improving the pot life and the adhesiveness, the content of the base generator (a) is preferably 5.00 parts by mass or less, more preferably 3.00 parts by mass or less, further preferably 1.00 part by mass or less, in a case in which the total mass of the polymerizable compounds is 100 parts by mass.

<Polyiso(thio)cyanate compound (b1)>

The composition of the present disclosure may include a polyiso(thio)cyanate compound (b1) as the polymerizable compound.

In the present disclosure, the polyiso(thio)cyanate compound refers to a compound having two or more isocyanate groups or two or more isothiocyanate groups in a single molecule.

The composition may include a single kind of polyiso(thio)cyanate compound (b1) or may include two or more kinds thereof.

The polyiso(thio)cyanate compound (b1) may include a dimer, a trimer or a prepolymer thereof. Examples of these polyiso(thio)cyanate compounds include the compounds described in International Publication No. WO2011/055540.

Examples of the polyiso(thio)cyanate compound (b1) include an aliphatic polyiso(thio)cyanate compound, an alicyclic polyiso(thio)cyanate compound, an aromatic polyiso(thio)cyanate compound and a heterocyclic polyiso(thio) cyanate compound.

The composition may include a single kind of the polyiso(thio)cyanate compound (b1) or two or more kinds thereof.

The alicyclic polyiso(thio)cyanate compound refers to a polyiso(thio)cyanate compound that includes an alicyclic structure, and optionally includes a heterocyclic structure. The aromatic polyiso(thio)cyanate compound refers to a polyiso(thio)cyanate compound that includes an aromatic structure, and optionally includes an alicyclic structure and a heterocyclic structure. The heterocyclic polyiso(thio)cyanate compound refers to a polyiso(thio)cyanate compound that includes a heterocyclic structure but does not include an alicyclic structure and an aromatic structure.

The composition preferably includes, as the polyiso(thio)cyanate compound (b1), at least one selected from the group consisting of an aliphatic polyiso(thio)cyanate compound, an alicyclic polyiso(thio)cyanate compound, an aromatic polyiso(thio)cyanate compound and a heterocyclic polyiso(thio)cyanate compound.

In light of exhibiting excellent adhesiveness and refractive index of the cured product, and in light of exhibiting excellent photo curability, the polyiso(thio)cyanate compound (b1) preferably include at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate;

more preferably at least one selected from the group consisting of 2,5-bis(isocyanatomethyl)bicyclo-[2.2.1]-heptane, 2,6-bis(isocyanatomethyl)bicyclo-[2.2.1]-heptane, xylylene diisocyanate, and 1,3-bis(isocyanatomethyl)cyclohexane;

further preferably at least one selected from the group consisting of 2,5-bis(isocyanatomethyl)bicyclo-[2.2.1]-heptane, 2,6-bis(isocyanatomethyl)bicyclo-[2.2.1]-heptane, and m-xylylene diisocyanate.

<Polythiol compound (c1)>

The composition of the present disclosure may include a polythiol compound (c1) as the polymerizable compound.

In the present disclosure, the polythiol compound refers to a compound having two or more thiol groups in a single molecule.

The composition may include a single kind of the polythiol compound (c1) or two or more kinds thereof.

Specific examples of the polythiol compound (c1) include the compounds described in International Publication No. WO2016/125736.

In light of exhibiting excellent photocurability, the polythiol compound (c1) preferably includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane;

more preferably includes at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate), and pentaerythritol tetrakis(2-mercaptoacetate);

further preferably includes at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane.

In light of the refractive index of the obtained cured product, the polythiol compound (c1) preferably has a refractive index with respect to the sodium D line (i.e., light with a wavelength of 589.3 nm) at 20°C of from 1.60 to 1.80.

<Other polymerizable compounds>

As necessary, the composition of the present disclosure may include a polymerizable compound other than the polyiso(thio)cyanate compound (b1) and the polythiol compound (c1).

For example, the composition may include an episulfide compound.

Examples of the episulfide compound include an episulfide compound represented by the following Formula (5).

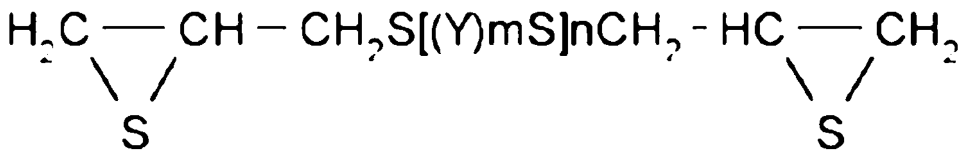

(5)

In Formula (5), Y represents a linear divalent hydrocarbon group with a carbon number from 1 to 4, a branched divalent hydrocarbon group with a carbon number from 2 to 4, a cyclic divalent hydrocarbon group with a carbon number from 3 to 6, a 1,4-dithiane group, an arylene group or an aralkylene group, m represents an integer from 0 to 2, and n represent an integer from 0 to 3.

Y may include a substitute or may be unsubstituted.

Y preferably represents a linear divalent hydrocarbon group with a carbon number from 1 to 4, a branched divalent hydrocarbon group with a carbon number from 2 to 4 or a cyclic divalent hydrocarbon group with a carbon number from 3 to 6, more preferably a linear divalent hydrocarbon group with a carbon number from 1 to 4.

m preferably represents 0 or 1, more preferably 0.
n preferably represents 0 or 1, more preferably 1.

Examples of the episulfide compound preferably include at least one selected from the group consisting of bis(2,3-epithiopropyl)sulfide, bis(2,3-epithiopropyl)disulfide and 2,5-bis(2,3-epithiopropylthiomethyl)-1,4-dithiane.

In light of the refractive index of the obtained cured product, the episulfide compound preferably has a refractive index with respect to the sodium D line (i.e., light with a wavelength of 589.3 nm) at 20°C of from 1.60 to 1.80.

When the composition includes the polymerizable compound other than the polyiso(thio)cyanate compound (b1) and the polythiol compound (c1), the total content of the polyiso(thio)cyanate compound (b1) and the polythiol compound (c1) in the total polymerizable compounds is preferably 50% by mass or more, more preferably 70% by mass or more, further preferably 80% by mass or more.

<Stabilizer (S)>

The composition of the present disclosure includes a stabilizer (S).

Preferred examples of the stabilizer (S) include an acid with a pKa of less than 2.0, an anhydride of an acid with a pKa of less than 2.0, and a phosphite ester.

The composition may include a single kind of the stabilizer (S) or two or more kinds thereof.

Specific examples of the acid with a pKa of less than 2.0 include hydrochloric acid (pKa: - 3.7), sulfuric acid (pKa: -3.0), nitric acid (pKa: -1.4), and a sulfonic acid with a pKa of less than 2.0. From the viewpoint of the pot life of the composition, a sulfonic acid with a pKa of less than 2.0 is preferred.

Examples of the sulfonic acid with a pKa of less than 2.0 include 10-camphorsulfonic acid (pKa: 1.2), methanesulfonic acid (pKa: -2.6), para-toluenesulfonic acid (pKa: -2.8), vinylsulfonic acid (pKa: -2.7) and benzenesulfonic acid (pKa: 0.7). The acid with a pKa of less than 2.0 may form a hydrate.

The pKa of the acid with a pKa of less than 2.0 may be 0.2 or more, 0.5 or more, or 1.0 or more.

Examples of the anhydride of an acid with a pKa of less than 2.0 include the anhydride of the acid as mentioned above. From the viewpoint of the pot life of the composition, an anhydride of a sulfonic acid with a pKa of less than 2.0 is preferred.

Specific examples of the phosphite ester include triphenyl phosphite, tris(4-methoxyphenyl) phosphite and tris(4-methylphenyl) phosphite. From the viewpoint of suppressing the self-polymerization of the polyiso(thio)cyanate compound (b1) under the presence of the base generator (a), triphenyl phosphite is preferred as the stabilizer.

From the viewpoint of suppressing the self-polymerization of the polyiso(thio)cyanate compound (b1) in the presence of the base generator (a) and from the viewpoint of the pot life of the composition, the content of the stabilizer (S) is preferably 0.001 parts by mass or more, more preferably 0.005 parts by mass or more, further preferably 0.01 parts by mass or more, in a case in which the total mass of the polymerizable compounds is 100 parts by mass.

From the viewpoint of the ability to polymerize of the polymerizable compounds, the content of the stabilizer (S) is preferably 1.0 part by mass or less, more preferably 0.5 parts by mass or less, further preferably 0.3 parts by mass or less, in a case in which the total mass of the polymerizable compounds is 100 parts by mass.

<Polyether-modified silicone compound (d)>

The composition of the present disclosure may include a polyether-modified silicone compound (d).

By including the polyether-modified silicone compound (d) in the composition, the cured product thereof tends to exhibit an improved mold releasability.

From the viewpoint of the mold releasability, the polyether-modified silicone compound (d) preferably includes at least one selected from the group consisting of a polyether-modified silicone compound (d1) represented by the following Formula (1) and a polyether-modified silicone compound (d2) represented by the following Formula (2).

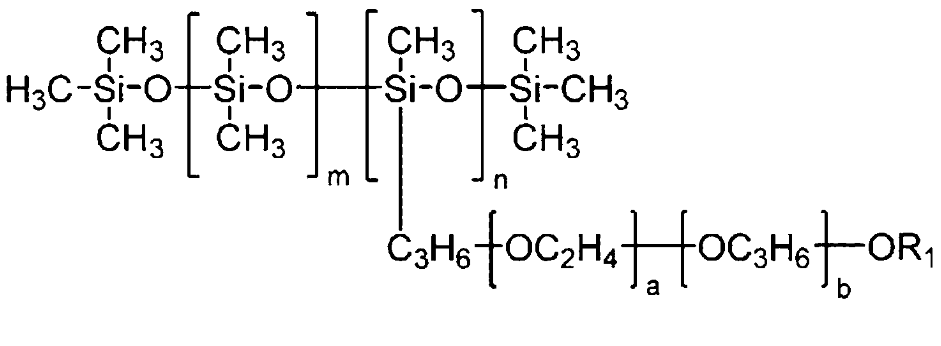

(1)

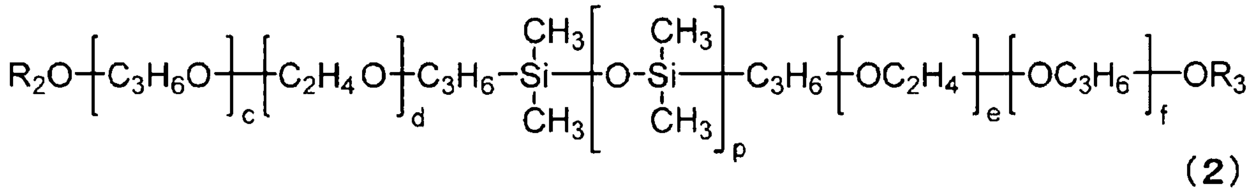

(2)

In Formula (1), each of m and n independently represents an integer of 1 or more. Each of a and b independently represents an integer of 0 or more (except the case that each of a and b is 0). $R_1$ represents a linear or branched alkyl group with a carbon number from 1 to 6, a linear or branched alkenyl group with a carbon number from 2 to 10, an acryloyl group, a methacryloyl group, or a hydrogen atom.

In Formula (2), p represents an integer of 1 or more. Each of c, d, e and f independently represents an integer of 0 or more (except the case that each of c, d, e and f is zero). Each of $R_2$ and $R_3$ independently represents a linear or branched alkyl group with a carbon number from 1 to 6, a linear or branched alkenyl group with a carbon number from 2 to 10, an acryloyl group, a methacryloyl group, or a hydrogen atom.

In Formula (1) and Formula (2), the unit represented by ($OC_3H_6$) refers to an oxypropylene group (O-$CH(CH_3)$-$CH_2$). The $C_3H_6$ in the unit represented by Si-$C_3H_6$-($OC_2H_4$) refers to a trimethylene group (1,3-propanediyl group (-$CH_2CH_2CH_2$-)).

In Formula (1), m is preferably an integer from 1 to 500, more preferably an integer from 10 to 300. n is preferably an integer from 1 to 100, more preferably an integer from 1 to 50.
a is preferably an integer from 0 to 100, more preferably an integer from 1 to 500. b is preferably an integer from 0 to 1000, more preferably an integer from 0 to 500.

The weight average molecular weight of the polyether-modified silicone compound represented by Formula (1) is preferably from 200 to 100,000, more preferably from 1,000 to 80,000.

In Formula (2), p is preferably an integer from 1 to 500, more preferably an integer from 10 to 300.

c and f are preferably an integer from 0 to 1000, more preferably an integer from 1 to 500.
d and e are preferably an integer from 0 to 1000, more preferably an integer from 0 to 500.

The weight average molecular weight of the polyether-modified silicone compound represented by Formula (2) is preferably from 200 to 100,000, more preferably from 1,000 to 80,000.

In Formula (1), the molar fraction of the silicone unit [i.e., (m+n)/(m+n+a+b)] is preferably from 0.08 to 0.60.

When the molar fraction of the silicone unit is 0.08 or more, it is possible to retain a sufficient degree of mold releasability.

When the molar fraction of the silicone unit is 0.60 or less, it is possible to suppress the fogging or opacity of the cured product, thereby retaining its transparency.

From the foregoing viewpoints, the molar fraction of the silicone unit in Formula (1) is more preferably from 0.10 to 0.50.

In Formula (1), the molar fraction of the polyether unit [i.e., (a+b)/(a+b+m+n)] is preferably from 0.40 to 0.92.

When the molar fraction of the polyether unit is 0.40 or more, it is possible to suppress the fogging or opacity of the cured product, thereby retaining its transparency.

When the molar fraction of the polyether unit is 0.92 or less, it is possible to retain a sufficient degree of mold releasability.

From the foregoing viewpoints, the molar fraction of the polyether unit in Formula (1) is more preferably from 0.50 to 0.90.

The molar fraction of the silicone unit and the polyether unit are measured by $^1$H-NMR including the following process.

In the first place, the value of integral in the chemical shift of $\delta_{ppm}$= 0.4-0.6 (Si-$CH_2$-(EO)) is determined as 2. The value of integral refers to the value of integral of the methylene group in the Si-$CH_2$-(EO) moiety.

Based on the foregoing value of integral, the values of integral X, Y and Z in the following chemical shift are calculated.

The value of A is calculated by the following Equation (1).

$$A = (((Z/3)-3)/2)+3 \qquad (1)$$

(1)

In Equation (1), Z refers to the value of integral in the chemical shift of $\delta_{ppm}$ = -0.2~0.2 ($CH_3$-Si). The foregoing

value of integral refers to the value of integral of the methyl group in the $CH_3$-Si moiety.

The value of B is calculated by the following Equation (2).

$$B=((X-Y-2)/4)+(Y/3) \qquad (2)$$

In Equation (2), X refers to the value of integral in the chemical shift of $\delta_{ppm}$ = 3.2-3.9 ($CH_2$-$CH_2$-O). The foregoing value of integral refers to the value of integral of the methylene group in the oxyethylene moiety.

In Equation (2), Y refers to the value of integral in the chemical shift of $\delta_{ppm}$ = 1.0-1.2 ($CH_2$-$CH(CH_3)$-O). The foregoing value of integral refers to the value of integral of the methyl group in the oxypropylene moiety.

The molar fraction of the silicone unit is measured by (A/(A+B)) × 100.

The molar fraction of the polyether unit is measured by (B/(A+B)) × 100.

In Formula (2), the molar fraction of the silicone unit [i.e., p/(p+c+d+e+f)] is preferably from 0.08 to 0.60.

In Formula (2), when the molar fraction of the silicone unit is 0.08 or more, it is possible to retain a sufficient degree of mold releasability.

In Formula (2), when the molar fraction of the silicone unit is 0.60 or less, it is possible to suppress the fogging or opacity of the cured product, thereby retaining its transparency.

From the foregoing viewpoints, the molar fraction of the silicone unit in Formula (2) is more preferably from 0.10 to 0.50.

In Formula (2), the molar fraction of the polyether unit [i.e., (c+d+e+f)/(c+d+e+f+p)] is preferably from 0.40 to 0.92.

In Formula (2), when the molar fraction of the polyether unit is 0.40 or more, it is possible to suppress the fogging or opacity of the cured product, thereby retaining its transparency.

In Formula (2), when the molar fraction of the polyether unit is 0.92 or less, it is possible to retain a sufficient degree of mold releasability.

From the foregoing viewpoints, the molar fraction of the polyether unit in Formula (2) is more preferably from 0.50 to 0.90.

The method for measuring the molar fraction of the silicone unit and the polyether unit is the same as the foregoing method.

In Formula (1) and Formula (2), the molar fraction of the total silicone unit [i.e., (m+n+p)/(m+n+p+a+b+c+d+e+f)] is preferably from 0.08 to 0.60.

In Formula (1) and Formula (2), when the molar fraction of the total silicone unit is 0.08 or more, it is possible to retain a sufficient degree of mold releasability.

In Formula (1) and Formula (2), when the molar fraction of the total silicone unit is 0.60 or less, it is possible to suppress the fogging or opacity of the cured product, thereby retaining its transparency.

From the foregoing viewpoints, the molar fraction of the total silicone unit in Formula (1) and Formula (2) is more preferably from 0.10 to 0.50.

In Formula (1) and Formula (2), the molar fraction of the total polyether unit [i.e., (a+b+c+d+e+f)/(a+b+c+d+e+f+m+n+p)] is preferably from 0.40 to 0.92.

In Formula (1) and Formula (2), when the molar fraction of the total polyether unit is 0.40 or more, it is possible to suppress the fogging or opacity of the cured product, thereby retaining its transparency.

In Formula (1) and Formula (2), when the molar fraction of the total polyether unit is 0.92 or less, it is possible to retain a sufficient degree of mold releasability.

From the foregoing viewpoints, the molar fraction of the total polyether unit in Formula (1) and Formula (2) is more preferably from 0.50 to 0.90.

When the polyether-modified silicone compound (d) includes both the polyether-modified silicone compound (d1) and the polyether-modified silicone compound (d2), the ratio (b1:b2) of the polyether-modified silicone compound (d1) to the polyether-modified silicone compound (d2) may be from 5:95 to 95:5, preferably from 10:90 to 90:10, more preferably 20:80 to 80:20, from the viewpoint of the effect of the second embodiment.

The polyether-modified silicone compound (d) may include a single kind of the polyether-modified silicone compound (d1) and a single kind of the polyether-modified silicone compound (d2); or may include two or more kinds of the polyether-modified silicone compound (d1) and two or mor kinds of the polyether-modified silicone compound (d2).

When the composition includes the polyether-modified silicone compound (d), the content thereof is preferably 0.01 parts by mass or more, more preferably 0.03 parts by mass or more, further preferably 0.05 parts by mass or more, in a case in which the total mass of the polymerizable compounds is 100 parts by mass, from the viewpoint of the mold releasability of the cured product.

The content of the polyether-modified silicone compound (d) is preferably 1.00 part by mass or less, more preferably 0.50 parts by mass or less, further preferably 0.30 parts by mass or less, in a case in which the total mass of the polymerizable compounds is 100 parts by mass, from the viewpoint of the transparency of the cured product.

<Ultraviolet absorber (e)>

The composition of the present disclosure may include an ultraviolet absorber (e).

By including the ultraviolet absorber (e), weather resistance of the composition or the cured product is improved.

The ultraviolet absorber (e) is preferably at least one selected from the group consisting of the compounds represented by the following Formula (e-1) to Formula (e-4).

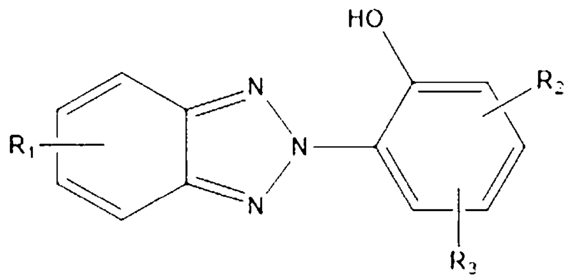

(e - 1)

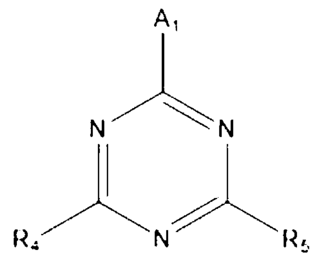

(e - 2)

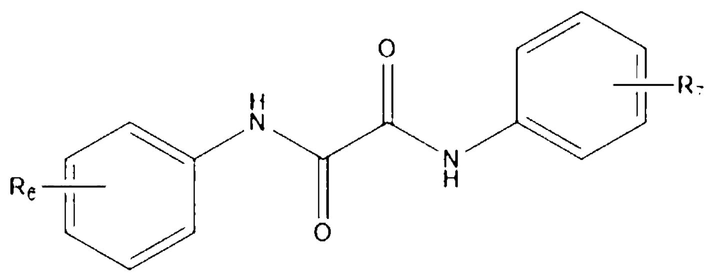

(e - 3)

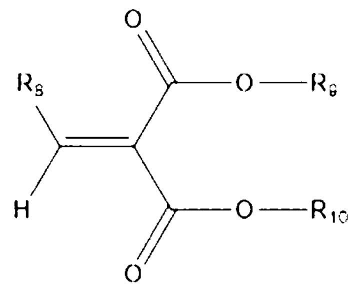

(e - 4)

In Formula (e-1), $R_1$ represents a hydrogen atom or a chlorine atom, each of $R_2$ and $R_3$ independently represents a substituted or unsubstituted linear or branched alkyl group with a carbon number from 1 to 12, or an aromatic group or a heteroaromatic group with a carbon number from 4 to 12.

When the substituted or unsubstituted linear or branched alkyl group with a carbon number from 1 to 12 includes a substituent, examples of the substituent include an aromatic group or a heteroaromatic group with a carbon number from 6 to 12.

Examples of the aromatic group and the heteroaromatic group include a phenyl group, a biphenyl group, a 2,3,5-trimethylphenyl group, a furyl group and a p-methoxyphenyl group.

The compound represented by Formula (e-1) may be a commercial product such as Tinuvin 234 (manufactured by BASF Japan) and Tinuvin 328 (manufactured by BASF Japan).

In Formula (e-2), $A_1$ represents a structure represented by the following Formula (e-2a), and each of $R_4$ and $R_5$ independently represents a structure represented by the following Formula (e-2b).

A1 -

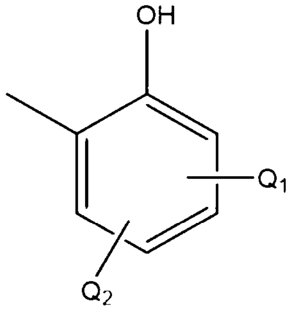

R4, R5 -

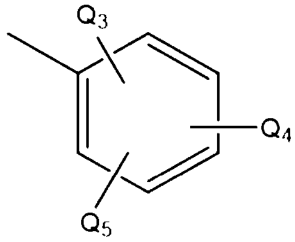

(e-2a) (e-2b)

In Formula (e-2a) and Formula (e-2b), each of $Q_1$ to $Q_5$ independently represents a linear or branched alkyl group with a carbon number from 1 to 12, a linear or branched alkoxy group with a carbon number from 1 to 18, a halogen, or an aromatic group or a heteroaromatic group with a carbon number from 4 to 12.

In the linear or branched alkyl group with a carbon number from 1 to 12, the carbon number is preferably from 1 to 6, more preferably from 1 to 3.

Examples of the linear or branched alkoxy group with a carbon number from 1 to 18 include a methoxy group, a butoxy group, a 2-hydroxy-3-octyloxy-propyloxy group, and a 2-ethylhexyloxy group.

Examples of the aromatic group and the heteroaromatic group include a phenyl group, a biphenyl group, a 2,3,5-trimethylphenyl group, a furyl group and a p-methoxyphenyl group.

The compound represented by Formula (e-2) may be a commercial product such as Tinuvin 405 (manufactured by BASF Japan) and Tinuvin 1600 (manufactured by BASF Japan).

In Formula (e-3), each of $R_6$ and $R_7$ independently represents a linear or branched alkyl group with a carbon number from 1 to 6, or a linear or branched alkoxy group with a carbon number from 1 to 6.

In Formula (e-3), examples of the linear or branched alkyl group with a carbon number from 1 to 6 include a methyl group, an ethyl group, a butyl group, a propyl group, a pentyl group and a hexyl group.

Examples of the linear or branched alkoxy group with a carbon number from 1 to 6 include a methoxy group, an ethoxy group, a butoxy group and a phenoxy group.

The compound represented by Formula (e-3) may be a commercial product such as Hostavin VSU (manufactured by Clariant Chemicals).

In Formula (e-4), $R_8$ represents an aromatic group with a carbon number from 6 to 20 that may be substituted, or an alicyclic group with a carbon number from 5 to 20 that may be substituted.

Each of $R_9$ and $R_{10}$ independently represents a linear or branched alkyl group with a carbon number from 1 to 6.

Examples of the aromatic group with a carbon number from 6 to 20 that may be substituted include a phenyl group, a benzyl group, a benzoyl group, and a p-methoxybenzyl group.

Examples of the alicyclic group with a carbon number from 5 to 20 that may be substituted include a cyclopentyl group, a cyclohexyl group, a cycloheptyl group, a cyclooctyl group, a cyclopentenyl group, and a cyclodecanyl group.

When the aromatic group or the alicyclic group includes a substituent, examples thereof include an alkyl group with a carbon number from 1 to 6 and an alkoxy group with a carbon number from 1 to 6.

The compound represented by Formula (e-4) may be a commercial product such as Hostavin PR25 (manufactured by Clariant Chemicals).

When the composition includes the ultraviolet absorber (e), the content thereof is preferably 0.01 parts by mass or more, more preferably 0.05 parts by mass or more, further preferably 0.10 parts by mass or more, in a case in which the total mass of the polymerizable compound is 100 parts by mass, from the viewpoint of the weather resistance of the cured product.

When the composition includes the ultraviolet absorber (e), the content thereof is preferably 3.00 parts by mass or less, more preferably 2.00 parts by mass or less, further preferably 1.00 parts by mass or less, in a case in which the total mass of the polymerizable compound is 100 parts by mass, from the viewpoint of the curability of the cured product.

(Metal Catalyst)

The composition of the present disclosure may include a metal catalyst.

When the composition includes a metal catalyst, it is possible to enhance the ability of the composition to polymerize, thereby achieving the improvements in the heat resistance, strength, hardness and adhesiveness of the cured

product.

From the viewpoint of improving the polymerizability, the metal catalyst preferably includes tin, zinc, bismuth, aluminum or zirconium, more preferably includes tin.

Examples of the tin-containing metal catalyst include dibutyltin(IV) dilaurate, dibutyltin(IV) dichloride and dimethyltin(IV) dichloride.

Among these, from the viewpoint of improving the polymerizability, the metal catalyst is preferably dibutyltin(IV) dichloride and dimethyltin(IV) dichloride.

From the viewpoint of improving the polymerizability, the content of the metal catalyst is preferably 0.001 parts by mass or more, more preferably 0.003 parts by mass or more, further preferably 0.005 parts by mass or more, in a case in which the total mass of the polymerizable compound is 100 parts by mass.

The content of the metal catalyst is preferably 0.5 parts by mass or less, more preferably 0.1 parts by mass or less, further preferably 0.05 parts by mass or less, in a case in which the total mass of the polymerizable compound is 100 parts by mass.

(Other Components)

As necessary, the composition may include a component other than the foregoing components.

For example, the composition may include a photosensitizer, a compound having an epoxy group, a phenol compound, a compound having an amino group, an inorganic compound having a sulfur atom, an inorganic compound having a selenium compound, a solvent, a blueing agent, an IR cutting agent, a blue-light cutting agent, a reactive diluent, an oil-soluble dye, a pigment, a fragrance, a filler, an adhesion-improving agent such as a coupling agent, a chain extender, a crosslinker, a defoamer, an anti-setting agent, a dispersant, a plasticizer, an antisagging agent, an antifouling agent, a preservative, a fungicide, an antibacterial agent, an antifungal agent, a matting agent, a thickener, a pigment dispersant, an anti-cratering, a scratch resistance-improving agent, a slip agent, a surface modifier, a color separation prevention agent, an emulsifier, an anti-skinning, a desiccant, an antifouling agent, an antistatic agent, an electroconductive agent (electrostatic aid), a flame regardant, a thermal conductivity-improving agent, a plasticizer, silica microparticles, zirconia microparticles, titania microparticles, zinc oxide microparticles, silver oxide microparticles, polyolefin microparticles, poly(meth)acrylic microparticles, polyurethane microparticles, and the like.

When the composition includes the foregoing components, the total content thereof may be from 0.1 ppm to 70 % by mass, from 1 ppm to 30 % by mass, from 10 ppm to 10 % by mass, or from 0.1 % by mass to 5 % by mass, with respect to the total mass of the composition.

<Composition Kit>

The composition kit of the present disclosure includes:

a first composition as the composition of the present disclosure; and
a second composition including a polymerizable compound that includes at least one selected from the group consisting of the polyiso(thio)cyanate compound (b2) and the polythiol compound (c2).

For example, the composition kit of the present disclosure is used for the method in which the first composition and the second composition are mixed at the time of producing a cured product (hereinafter, also referred to as a two-component method). In the two-component method, the cured product is produced by mixing two kinds of compositions containing necessary components at predetermined amounts. Therefore, it is possible to produce the cured product without the special technique or knowledge that is required for the preparation of the composition. Accordingly, the composition kit of the present disclosures exhibits excellent handleability.

The first composition and the second composition that constitute the composition kit include a polymerizable compound, respectively.

When the first composition includes the polyiso(thio)cyanate compound (b1) and the polythiol compound (c1) as the polymerizable compounds, the mass ratio of the polymerizable compounds included in the first composition may be determined such that the first composition satisfies the following Condition A or Condition B:

Condition A: the mass ratio (b1/c1) of the polyiso(thio)cyanate compound (b1) and the polythiol compound (c1) in the polymerizable compound in the first composition is in a range of from 99/1 to 70/30, from 99/1 to 75/25, or from 95/5 to 80/20.
Condition B: the mass ratio (b1/c1) of the polyiso(thio)cyanate compound (b1) and the polythiol compound (c1) in the polymerizable compound in the first composition is in a range of from 1/99 to 30/70, from 1/99 to 25/75, or from 5/95 to 20/80.

When the first composition includes the polyiso(thio)cyanate compound (b1) and the polythiol compound (c1) as the polymerizable compound, part of the polyiso(thio)cyanate compound (b1) and the polythiol compound (c1) may react with each other to form a thiourethane compound in the first composition. Namely, the first composition may include a thiourethane compound as a reaction compound of the polyiso(thio)cyanate compound (b1) and the polythiol compound (c1).

The mass ratio ((b1+b2)/(c1+c2)) of the polymerizable compounds included in the first composition and the second composition that constitute the composition kit is preferably in a range of from 40/60 to 60/40.

When the mass ratio ((b1+b2)/(c1+c2)) of the polymerizable compounds included in the first composition and the second composition is in a range of from 40/60 to 60/40, it is possible to effectively reduce the amount of the polymerizable compounds that do not contribute to the polymerization reaction.

The second composition may include either the polyiso(thio)cyanate compound (b1) or the polythiol compound (c1), or may include both the polyiso(thio)cyanate compound (b1) and the polythiol compound (c1).

When the first composition does not include the polyiso(thio)cyanate compound (b1) as the polymerizable compound, the second composition includes at least the polyiso(thio)cyanate compound (b2) as the polymerizable compound.

When the first composition does not include the polythiol compound (c1) as the polymerizable compound, the second composition includes at least the polythiol compound (c2) as the polymerizable compound.

The polyiso(thio)cyanate compound (b2) or the polythiol compound (c2) included in the second composition may be the foregoing compounds described as the polyiso(thio)cyanate compound (b1) or the polythiol compound (c1) included in the first composition, respectively.

The polyiso(thio)cyanate compound (b1) included in the first composition and the polyiso(thio)cyanate compound (b2) included in the second composition may be the same or different from each other.

The polythiol compound (c1) included in the first composition and the polythiol compound (c2) included in the second composition may be the same or different from each other.

The second composition may include a component other than the polyiso(thio)cyanate compound (b2) or the polythiol compound (c2). For example, the second composition may include the foregoing components that may be included in the first composition.

From the viewpoint of handleability, the second composition preferably does not include a base generator. Further, the second composition preferably includes either the polyiso(thio)cyanate compound (b2) or the polythiol compound (c2).

The purpose of the composition kit of the present disclosure is not particularly limited. Since the thiourethane resin formed using the composition kit of the present disclosure has a high degree of refractive index, the composition kit is suitably used as the material for the components to which a high degree of transparency is required, such as optical members.

The composition kit of the present disclosure may be used as an adhesive. For example, the composition kit may be used as an adhesive for bonding an optical member with an optical member, or for bonding an optical member with a member other than an optical member. Examples of the optical members for the adhesive to bond include ICT (Information and Communication Technology) members, AR (Augmented Reality) members, and VR (Virtual Reality) members.

The composition kit of the present disclosure may be used as a coating agent. For example, the composition kit may be used as a coating agent for coating a surface of the optical member. Examples of the optical member to which the coating agent is applied include lenses, ICT members, AR members, and VR members.

<Cured Product>

The cured product of the present disclosure is a cured product of a mixture of the first composition and the second composition included in the composition kit as described above.

The cured product of the present disclosure can be obtained by causing a polymerizable reaction of the polymerizable compounds by applying light to the mixture. Therefore, the cured product of the present disclosure may have a configuration that is difficult to realize by the thermal polymerization method.

The cured product of the present disclosure may have a refractive index of from 1.50 to 1.80, from 1.55 to 1.75, or from 1.60 to 1.70.

When the cured product of the present disclosure is an optical member, specific examples thereof include an optical adhesive, a coating agent, an optical waveguide, a film, a lens, an antireflection film, a microlens, a microlens array, a wafer level lens, an imaging lens of a camera (such as a car camera, a digital camera, a PC camera, a mobile phone camera and a security camera), a lens for eyewear, an optical beam-collecting lens, and a lens for a flash of a camera.

<Laminate>

The laminate of the present disclosure includes the foregoing cured product of the present disclosure, and a substrate.

Embodiments of the cured product included in the laminate include a layer that is disposed at a surface of the substrate (for example, a coating layer) and a layer that is disposed between the plural substrates (for example, an adhesive layer).

The laminate may have an intermediate layer that is disposed between the substrate and the cured product. By disposing the intermediate layer between the substrate and the cured product of the present disclosure, for example, it is possible to improve the adhesiveness between the cured product and the substrate.

The material for the intermediate layer is not particularly limited, and may be selected depending on the purpose of the intermediate layer. Examples of the material for the intermediate layer include polyurethane aqueous dispersions and transparent adhesives.

The thickness of the cured product included in the laminate is not particularly limited. From the viewpoint of photo curability, the thickness of the cured product is preferably 10 mm or less, more preferably 5 mm or less, further preferably 3 mm or less. From the viewpoint of securing the necessary properties, the thickness of the cured product is preferably 0.01 μm or more, more preferably 0.05 μm or more, further preferably 0.1 μm or more.

The type of the substrate included in the laminate is not particularly limited. Examples of the substrate include quartz, glass, optical films, ceramic materials, evaporated films, magnetic films, metal plates, metal foils, paper, SOG (Spin on Glass), polyester resin, polycarbonate resin, polyimide resin, polyurethane resin, polythiourethane resin, polyepisulfide resin, polyurethane urea resin, polyacrylic resin, polyallyl resin, polyvinyl resin, polyolefin resin, acetyl cellulose resin, TFT array substrates, PDP electrode plates, electroconductive substrates of metals (such as ITO), insulating substrates, and substrates for semiconductor such as silicone, silicone nitride, polysilicone, silicone oxide, and amorphous silicone.

The laminate may include a single kind of substrate, or may include two or more kinds thereof.

As necessary, a pre-treatment such as etching may be performed to the substrate to be used for the laminate. Examples of the etching process include alkali etching in which the substrate is immersed in an alkali aqueous solution, plasma etching in which the substrate is exposed to a gas plasma such as oxygen, and UV ozone etching in which the substrate is exposed to ultraviolet rays and ozone.

The laminate may include a functional film. When the laminate includes a functional film, examples of the location for the functional film to be disposed include the inside of the cured product and the surface of the cured product.

The type of the functional film is not particularly limited, and may be selected depending on the purpose of the laminate. Specific examples of the functional film include a polarizing film, a phase difference film, a gas barrier film, an electroconductive film, an insulating film and a lightguide film.

When the laminate includes the functional film, at least a portion of the functional film may be in direct contact with the cured product.

<Method for Producing Cured Product>

The method for producing a cured product of the present disclosure includes:

obtaining a mixture of the first composition and the second composition included in the foregoing composition kit of the present disclosure; and
applying ultraviolet rays or visible light to the mixture.

The method for preparing a mixture of the first composition and the second composition is not particularly limited, and the preparation may be performed by a known method.

For example, the mixture may be obtained using a two-component dispenser by which the first composition and the second composition are ejected, respectively.

The method for applying ultraviolet rays or visible light to the mixture of the first composition and the second composition is not particularly limited, and the application may be performed by a known method.

The ultraviolet rays or visible light preferably include light at a wavelength of from 200 nm to 450 nm.

In an example of the application conditions, the application intensity may be from 0.1 $mW/cm^2$ to 1,000 $mW/cm^2$, the accumulated light intensity may be from 10 $mJ/cm^2$ to 30,000 $mJ/cm^2$, and the application time may be from 0.1 seconds to 500 seconds.

The ultraviolet rays or visible light may be applied to the mixture either in a direct manner or through an object that is transparent to the ultraviolet rays or visible light (such as a mold).

From the viewpoint of improving the polymerizability of the polymerizable compound, the method may include heating the mixture. The heating may be performed together with the application of the ultraviolet rays or visible light,

before the application of the ultraviolet rays or visible light, or after the application of the ultraviolet rays or visible light.

The conditions for the heating are not particularly limited. For example, the heating temperature may be selected from 20°C to 200°C and the heating time may be selected from 0.1 hours to 80 hours.

From the viewpoint of relaxing an internal stress that is generated inside the cured product during curing, the method may include subjecting the cured product to an annealing treatment.

The conditions for the annealing treatment are not particularly limited. For example, the treatment temperature may be selected from 50°C to 150°C, preferably from 70°C to 140°C, more preferably from 80°C to 130°C.

The method may include storing the composition kit at room temperature.

In the present disclosure, the room temperature refers to a temperature range of from 15°C to 35°C.

As shown in the following Examples, the composition kit of the present disclosure exhibits excellent storage stability at room temperature.

## Examples

In the following, examples of the present disclosure are shown. However, the present disclosure is not limited to these examples.

In the following examples, the viscosity of the composition is measured at 20°C based on the method described in JIS K7117:1991 using a Brookfield B type viscometer.

In the following examples, the room temperature refers to a temperature range of from 15°C to 35°C.

### <Comparative Example 1>

Tetrabutylammonium tri(1-naphthyl)butylborate (0.4 parts by mass, manufactured by Showa Denko K.K.) as the base generator was dissolved in xylylene diisocyanate (50.7 parts by mass) as the polyisocyanate compound. After completely dissolving, a polythiol composition including 5,7-dimercaptomethyl-1,11-dimercapto-3,6,9-trithiaundecane, 4,7-dimercaptomethyl-1,11-dimercapto-3,6,9-trithiaundecane and 4,8-dimercaptomethyl-1,11-dimercapto-3,6,9-trithiaundecane as the major components (49.3 parts by mass) was added and agitated for further 10 minutes, thereby obtaining a composition. The obtained composition was stored at 20°C in an oven. The viscosity of the composition was measured at the time of starting the storage (initial stage) and at 1, 3, 5, 7 or 24 hours after the start of the storage. The results are shown in Table 1.

### <Example 1>

Tetrabutylammonium tri(1-naphthyl)butylborate (0.4 parts by mass, manufactured by Showa Denko K.K.) as the base generator and 10-camphorsulfonic acid (0.01 parts by mass, manufactured by Tokyo Chemical Industry Co., Ltd.) as the stabilizer were dissolved in xylylene diisocyanate (50.7 parts by mass) as the polyisocyanate compound. After completely dissolving, a polythiol composition including 5,7-dimercaptomethyl-1,11-dimercapto-3,6,9-trithiaundecane, 4,7-dimercaptomethyl-1,11-dimercapto-3,6,9-trithiaundecane and 4,8-dimercaptomethyl-1,11-dimercapto-3,6,9-trithiaundecane as the major components (49.3 parts by mass) was added and agitated for further 10 minutes, thereby obtaining a composition. The obtained composition was stored at 20°C in an oven. The viscosity of the composition was measured at the time of starting the storage (initial) and at 1, 3, 5, 7 or 24 hours after the start of the storage. The results are shown in Table 1.

Table 1

| | Time Elapsed [h] | Initial | 1 | 3 | 5 | 7 | 24 |
|---|---|---|---|---|---|---|---|
| Comparative Example 1 | Viscosity [cP] | 24.0 | 27.0 | 35.4 | 47.4 | 65.7 | 814.5 |
| Example 1 | Viscosity [cP] | 24.3 | 27.0 | 32.4 | 39.6 | 48.0 | 228.9 |

As shown in Table 1, the composition of Example 1, including the stabilizer in addition to the base generator and the polymerizable compound, maintained a low degree of viscosity even with the lapse of time from the start of the storage, as compared with the composition of Comparative Example 1, including the base generator and the polymerizable compound but not including the stabilizer.

### <Comparative Example 2>

Tetrabutylammonium tri(1-naphthyl)butylborate (0.06 parts by mass, manufactured by Showa Denko K.K.) as

the base generator was dissolved in xylylene diisocyanate (10 parts by mass) as the polyisocyanate compound. After completely dissolving, the solution was stored at 25°C for 12 hours. The solution became a milky-white gel-like material.

<Example 2>

Tetrabutylammonium tri(1-naphthyl)butylborate (0.06 parts by mass, manufactured by Showa Denko K.K.) as the base generator and triphenyl phosphite (0.02 parts by mass, manufactured by Tokyo Chemical Industry Co., Ltd.) as the stabilizer were dissolved in xylylene diisocyanate (10 parts by mass) as the polyisocyanate compound. After completely dissolving, the solution was stored at 25°C for 12 hours. The solution maintained a state of transparent liquid, contrary to the composition of Comparative Example 2. The results suggest that the self-polymerization of the polyisocyanate compound is suppressed by including triphenyl phosphite as the stabilizer, even in the presence of the base generator.

<Example 3>

Tetrabutylammonium tri(1-naphthyl)butylborate (1.77 parts by mass, manufactured by Showa Denko K.K.) as the base generator, 10-camphorsulfonic acid (0.018 parts by mass, manufactured by Tokyo Chemical Industry Co., Ltd.) as the stabilizer, Hostavin PR-25 (0.09 parts by mass, manufactured by Clariant) as the ultraviolet absorber, and SH-3773M (0.036 parts by mass, manufactured by Dow Chemical Japan Ltd.) as the polyether-modified silicone compound were dissolved in xylylene diisocyanate (90 parts by mass) as the polyisocyanate compound.

After completely dissolving, a polythiol composition including 5,7-dimercaptomethyl-1,11-dimercapto-3,6,9-trithiaundecane, 4,7-dimercaptomethyl-1,11-dimercapto-3,6,9-trithiaundecane and 4,8-dimercaptomethyl-1,11-dimercapto-3,6,9-trithiaundecane as the major components (9 parts by mass) was added and agitated for further 30 to 60 minutes. The mixture was filtered with a 3 μm PTFE filter and degassed under vacuum while agitating for 30 minutes to 60 minutes, thereby obtaining the first composition (MB1).

The first composition (MB1) was stored at 5°C for 85 days. The viscosity measured at 20°C at the initial stage of the storage was 12.3 cP, and the viscosity at 85 days after the start of the storage was 30 cP.

Further, when the first composition (MB1) was stored at room temperature, the composition (MB1) was in a state of transparent liquid with no deposition due to polymerization at 5 days after the start of the storage.

The first composition (MB1) after storage at 5°C for 85 days (10 parts by mass) was added to the polythiol composition as the second composition including 5,7-dimercaptomethyl-1,11-dimercapto-3,6,9-trithiaundecane, 4,7-dimercaptomethyl-1,11-dimercapto-3,6,9-trithiaundecane and 4,8-dimercaptomethyl-1,11-dimercapto-3,6,9-trithiaundecane as the major components (8.67 parts by mass), and agitated for further 30 minutes. The mixture was filtered with a 3 μm PTFE filter and degassed under vacuum while agitating for 30 minutes to 60 minutes, thereby obtaining a mixture of the first composition and the second composition.

The obtained mixture was injected into a space between a pair of flat glass molds fixed at an interval of 0.8 mm with a tape. Subsequently, the mixture was exposed to light (365 nm) for 30 seconds (9 $mW/cm^2/s$) and then heated at 120°C for 1 hour in an oven, thereby causing the polymerization of the mixture. The obtained cured product had a refractive index of 1.67 and transparency suitable as optical members.

<Example 4>

Tetrabutylammonium tri(1-naphthyl)butylborate (0.53 parts by mass, manufactured by Showa Denko K.K.) as the base generator, 10-camphorsulfonic acid (0.018 parts by mass, manufactured by Tokyo Chemical Industry Co., Ltd.) as the stabilizer, triphenyl phosphite (0.53 parts by mass, manufactured by Tokyo Chemical Industry Co., Ltd.) as the stabilizer, Hostavin PR-25 (0.35 parts by mass, manufactured by Clariant) as the ultraviolet absorber, dimethyltin(IV) dichloride (0.009 parts by mass, manufactured by Tokyo Chemical Industry Co., Ltd.) as the metal catalyst and SH-3773M (0.09 parts by mass, manufactured by Dow Chemical Japan Ltd.) as the polyether-modified silicone compound were dissolved in xylylene diisocyanate (90 parts by mass) as the polyisocyanate compound. The mixture was filtered with a 3 μm PTFE filter and degassed under vacuum while agitating for 30 minutes to 60 minutes, thereby obtaining a mixture of the first composition (MB2).

The first composition (MB2) was stored at 5°C for 85 days. The first composition kept a stable viscosity measured at 20°C, at 9cP, during the time period of from the initial stage to the 35th days after the start of the storage.

Further, when the first composition (MB2) was stored at room temperature, the composition (MB2) was in a state of pale yellow transparent liquid with no deposition due to polymerization at 5 days after the start of the storage.

The first composition (MB2) after storage at 5°C for 35 days (10 parts by mass) was added to the polythiol composition as the second composition including 5,7-dimercaptomethyl-1,11-dimercapto-3,6,9-trithiaundecane, 4,7-dimercaptomethyl-1,11-dimercapto-3,6,9-trithiaundecane and 4,8-dimercaptomethyl-1,11-dimercapto-3,6,9-trithiaundecane as the major components (9.56 parts by mass), and agitated for further 30 minutes. The mixture was filtered with a 3 μm PTFE filter and degassed under vacuum while agitating for 30 minutes to 60 minutes, thereby obtaining a mixture of the first composition and the second composition.

The obtained mixture was injected into a space between a pair of flat glass molds fixed at an interval of 0.8 mm. Subsequently, the mixture was exposed to light (365 nm) for 30 seconds (9 $mW/cm^2/s$) and then heated at 120°C for 1 hour in an oven, thereby causing the polymerization of the mixture. The obtained cured product had a refractive index of 1.67 and transparency suitable as optical members.

<Example 5>

Tetrabutylammonium tri(1-naphthyl)butylborate (0.546 parts by mass, manufactured by Showa Denko K.K.) as the base generator, 10-camphorsulfonic acid (0.018 parts by mass, manufactured by Tokyo Chemical Industry Co., Ltd.) as the stabilizer, dimethyltin(IV)dichloride (0.009 parts by mass, manufactured by Tokyo Chemical Industry Co., Ltd.) as the metal catalyst and triphenyl phosphite (0.546 parts by mass, manufactured by Tokyo Chemical Industry Co., Ltd.) as the stabilizer were dissolved in xylylene diisocyanate (9 parts by mass) as the polyisocyanate compound.

After completely dissolving, the polythiol composition including 5,7-dimercaptomethyl-1,11-dimercapto-3,6,9-trithiaundecane, 4,7-dimercaptomethyl-1,11-dimercapto-3,6,9-trithiaundecane and 4,8-dimercaptomethyl-1,11-dimercapto-3,6,9-trithiaundecane as the major components (90 parts by mass) was added and agitated for further 30 minutes. The mixture was filtered with a 3 μm PTFE filter and degassed under vacuum while agitating for 30 minutes to 60 minutes, thereby obtaining the first composition (MB3).

The first composition (MB3) was stored at room temperature for 6 weeks, and then the viscosity was measured at 20°C. The viscosity was in a favorable state at 3600 cP. Further, the yellow index (measured in a cell with a thickness of 10 mm) of the first composition was measured after the storage for 6 weeks. The yellow index was stable at below 0.5.

The first composition (MB3) after storage at 5°C for 40 days (40 parts by mass) was mixed with the second composition including xylylene diisocyanate (36.96 parts by mass), SH-3773M (0.04 parts by mass, manufactured by Dow Chemical Japan Ltd.) as the polyether-modified silicone compound and Hostavin PR-25 (0.144 parts by mass, manufactured by Clariant) as the ultraviolet absorber, and agitated for further 30 minutes. The viscosity of the mixture at this time measured at 20°C was 39 cP. Thereafter, the mixture was filtered with a 3 μm PTFE filter and degassed under vacuum while agitating for 30 minutes to 60 minutes, thereby obtaining a mixture of the first composition and the second composition.

The obtained mixture was injected into a space between a pair of flat glass molds fixed at an interval of 0.8 mm. Subsequently, the mixture was exposed to light (365 nm) for 60 seconds (9 $mW/cm^2/s$) and then heated at 120°C for 1 hour in an oven, thereby causing the polymerization of the mixture. The obtained cured product had a refractive index of 1.67 and transparency suitable as optical members.

A cured product was obtained in the same manner as the foregoing method, except that the first composition (MB3) stored at room temperature for 40 days was used instead of the first composition (MB3) stored at 5°C for 40 days. The obtained cured product had a refractive index of 1.67 and transparency suitable as optical members.

<Example 6>

Tetrabutylammonium tri(1-naphthyl)butylborate (0.784 parts by mass, manufactured by Showa Denko K.K.) as the base generator was dissolved in a mixture of 2,5-bis(isocyanatomethyl)bicyclo-[2.2.1]-heptane and 2,6-bis(isocyanatomethyl)bicyclo-[2.2.1]-heptane (9 parts by mass, containing triphenyl phosphite by 2000 ppm as the stabilizer) as the polyisocyanate compound.

After completely dissolving, the polythiol composition including 4-mercaptomethyl-1,8-dimercapto-3,6-dithiaoctane as the major component (90 parts by mass) was added and agitated for further 30 minutes. The mixture was filtered with a 3 μm PTFE filter and degassed under vacuum while agitating for 30 minutes to 60 minutes, thereby obtaining the first composition (MB4).

The first composition (MB3) was stored at room temperature for 6 weeks, and then the viscosity was measured at 20°C. The viscosity was in a favorable state at 247 cP. Further, the yellow index (measured in a cell with a thickness of 10 mm) of the first composition was measured after the storage for 6 weeks. The yellow index was stable at below 0.5.

The first composition (MB4) after storage at 5°C for 40 days (40 parts by mass) was mixed with the second composition including a mixture of 2,5-bis(isocyanatomethyl)bicyclo-[2.2.1]-heptane and 2,6-bis(isocyanatomethyl)bicyclo-[2.2.1]-heptane (42.9 parts by mass) as the polyisocyanate compound, KF-351A (0.08 parts by mass, manufactured by Shin-Etsu Chemical Co., Ltd) as the polyether-modified silicone compound and Hostavin PR-25 (0.16 parts by mass, manufactured by Clariant) as the ultraviolet absorber, and agitated for further 30 minutes. The viscosity of the mixture at this time measured at 20°C was 32 cP. Thereafter, the mixture was filtered with a 3 μm PTFE filter and degassed under vacuum while agitating for 30 minutes to 60 minutes, thereby obtaining a mixture of the first composition and the second

composition.

The obtained mixture was injected into a space between a pair of flat glass molds fixed at an interval of. Subsequently, the mixture was exposed to light (365 nm) for 30 seconds (9 mW/cm$^2$/s) and then heated at 120°C for 1 hour in an oven, thereby causing the polymerization of the mixture. The obtained cured product had a refractive index of 1.62 and transparency suitable as optical members.

A cured product was obtained in the same manner as the foregoing method, except that the first composition (MB4) stored at room temperature for 40 days was used instead of the first composition (MB4) stored at 5°C for 40 days. The obtained cured product had a refractive index of 1.62 and transparency suitable as optical members.

<Example 7>

A layer of polyurethane aqueous dispersion (SF-470, manufactured by DKS Co., Ltd.) was formed on one face of a glass wafer (soda glass, diameter 100 mm, thickness 0.5 mm) by spin coating. The layer was dried at 80°C for 30 seconds and cured at 100°C for 2 hours, thereby forming a thin film. The mixture obtained in Example 5 was applied onto the thin film, and a flat glass mold was further disposed thereon. The distance between the glass wafer and the glass mold was adjusted to approximately 0.45 mm. Subsequently, the mixture was exposed to light (365 nm) for 60 seconds (1.5 mW/cm$^2$/s) and then heated at 120°C for 1 hour in an oven, thereby causing the polymerization of the mixture.

Thereafter, the laminate in which the glass wafer, the thin film formed of SF-470 and the cured product of the mixture were disposed in this order was released from the glass mold, and subjected to an annealing treatment at 120°C for 1 hour. The layer formed of the cured product of the mixture had a thickness of 0.4 mm and had transparency suitable as optical members.

The laminate as shown in Example 7 is suitably applied for the products used in the AR/VR technology, such as head mounted displays and microlenses.

<Example 8>

The mixture obtained in Example 6 was applied onto a curved glass mold having a microlens pattern. Subsequently, a surface of a curved lens substrate (MR-10 resin) was subjected to an alkali or plasma treatment, and the surface after the treatment was pressed against the mixture on the glass mold, whereby the mixture was spread between the glass mold and the lens substrate. Subsequently, the mixture was exposed to light (365 nm) for 60 seconds (9.5 mW/cm$^2$/s) and then heated at 90°C for 30 minutes in an oven, thereby causing the polymerization of the mixture.

Thereafter, the laminate formed of the lens substrate and the cured product layer of the composition was released from the glass mold, and subjected to an annealing treatment at 120°C for 1 hour. The cured product layer of the laminate had a microlens pattern transferred thereto. The transferability of the microlens patten was analyzed by laser microscopy and interferometric microscopy. The cured product layer had a thickness of approximately 10 $\mu$m and had transparency suitable as optical members.

The laminate having a microlens patten as shown in Example 8 is suitably applied for the products having a microlens for myopia control, such as eyewear, for example.

<Example 9>

Tetrabutylammonium tri(1-naphthyl)butylborate (2.5 parts by mass, manufactured by Showa Denko K.K.) as the base generator, 10-camphorsulfonic acid (0.06 parts by mass, manufactured by Tokyo Chemical Industry Co., Ltd.) as the stabilizer, dimethyltin(IV)dichloride (0.03 parts by mass, manufactured by Tokyo Chemical Industry Co., Ltd.) as the metal catalyst and triphenyl phosphite (1.88 parts by mass, manufactured by Tokyo Chemical Industry Co., Ltd.) as the stabilizer were dissolved in xylylene diisocyanate (30 parts by mass) as the polyisocyanate compound.

After completely dissolving, the polythiol composition including 4-mercaptomethyl-1,8-dimercapto-3,6-dithiaoctane as the major component (300 parts by mass) was added and agitated for 2 hours, thereby obtaining the first composition (MB5). The first composition (MB5) was placed in a glass container and stored at room temperature.

The second composition was prepared by dissolving KF-640 (1.9 parts by mass, manufactured by Shin-Etsu Chemical Co., Ltd) as the polyether-modified silicone compound and Hostavin PR-25 (1.27 parts by mass, manufactured by Clariant) as the ultraviolet absorber in xylylene diisocyanate (300 parts by mass) as the polyisocyanate compound, and agitating the solution for 2 hours. The second composition was placed in a glass container and stored at room temperature.

The first composition and the second composition were filtered with a 3 $\mu$m PTFE filter and degassed under vacuum while agitating for 30 minutes, and charged into tanks of a dispenser having a function to mix two compositions (dual mixer MRP-150, manufactured by Nippon Sosey Kogyo Corporation). The first composition and the second composition were mixed in the dispenser, and the mixture was injected into a space between a pair of glass molds disposed at an interval of 2 mm immediately after the mixing. Subsequently, the mixture was exposed to light (365 nm) for

30 seconds (9 mW/cm$^2$/s) and then heated at 120°C for 1 hour in an oven, thereby causing the polymerization of the mixture. The obtained cured product had a refractive index of 1.67 and transparency suitable as optical members.

The foregoing results indicate that the composition kit including the first composition and the second composition is suitably used for the method of producing the cured product using a two-component type dispenser.

The disclosure of Japanese Patent Application No. 2023-041165 is incorporated herein by reference in its entirety.

All publications, patent applications, and technical standards mentioned in the present specification are incorporated herein by reference to the same extent as if each individual publication, patent application, or technical standard was specifically and individually indicated to be incorporated by reference.

## Claims

**1.** A composition, comprising:

a base generator (a);
a polymerizable compound comprising at least one selected from the group consisting of a polyiso(thio)cyanate compound (b1) and a polythiol compound (cl); and
a stabilizer (S).

**2.** The composition according to claim 1, wherein the polymerizable compound comprises the polyiso(thio)cyanate compound (b1) and the polythiol compound (c1).

**3.** The composition according to claim 2, wherein a mass ratio (b1/c1) of the polyiso(thio)cyanate compound (b1) and the polythiol compound (c1) in the polymerizable compound is from 99/1 to 1/99.

**4.** The composition according to claim 2, comprising a thiourethane compound that is a reaction product of the polyiso(thio)cyanate compound (b1) and the polythiol compound (c1).

**5.** The composition according to claim 1, wherein the polyiso(thio)cyanate compound (b1) comprises at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

**6.** The composition according to claim 1, wherein the polythiol compound (c1) comprises at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.

**7.** The composition according to claim 1, wherein the base generator (a) comprises at least one selected from compounds represented by the following Formula (1) to Formula (4):

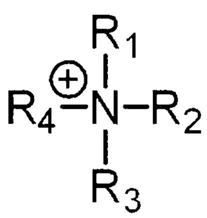
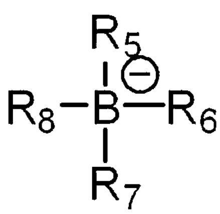

(1)

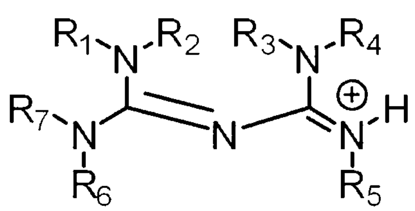
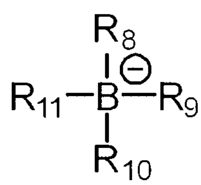

(2)

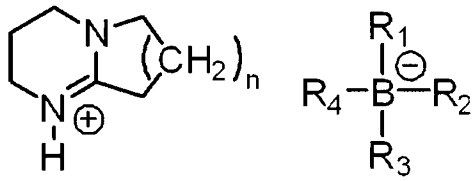

(3)

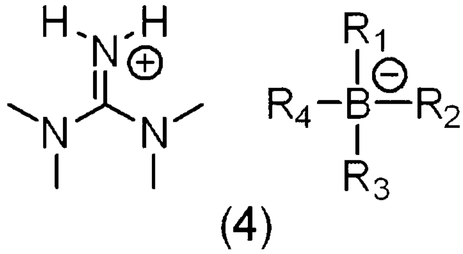

(4)

wherein, in Formula (1), each of $R_1$ to $R_4$ independently represents an alkyl group with a carbon number from 1 to 8, and each of $R_5$ to $R_8$ independently represents an alkyl group with a carbon number from 1 to 8, a phenyl group, a naphthyl group, an anthracenyl group or a phenanthryl group;

in Formula (2), each of $R_1$ to $R_7$ independently represents an alkyl group with a carbon number from 1 to 8 or a cycloalkyl group with a carbon number from 3 to 8, and each of $R_8$ to $R_{11}$ independently represents an alkyl group with a carbon number from 1 to 8, a phenyl group, a naphthyl group, an anthracenyl group or a phenanthryl group;

in Formula (3), n represents an integer from 1 to 3, and each of $R_1$ to $R_4$ independently represents an alkyl group with a carbon number from 1 to 8, a phenyl group, a naphthyl group, an anthracenyl group or a phenanthryl group;

in Formula (4), each of $R_1$ to $R_4$ independently represents an alkyl group with a carbon number from 1 to 8, a phenyl group, a naphthyl group, an anthracenyl group or a phenanthryl group; and

in Formula (1) to Formula (4), the phenyl group, the naphthyl group, the anthracenyl group or the phenanthryl group may be substituted by a halogen atom, an alkyl group, an aryl group, an alkenyl group, a cycloalkyl group or a heterocyclic group.

**8.** The composition according to claim 1, wherein the stabilizer (S) comprises either an acid with a pKa of from 0.2 to less than 2.0 or a phosphite ester.

**9.** The composition according to claim 1, wherein the stabilizer (S) comprises at least one selected from the group of an acid with a pKa of less than 2.0 and a phosphite ester.

**10.** The composition according to claim 1, further comprising a tin-containing metal catalyst, wherein a content of the tin-containing metal catalyst is from 0.001 parts by mass to 0.05 parts by mass in a case in which a total mass of the polymerizable compound is 100 parts by mass.

**11.** The composition according to claim 1, further comprising an ultraviolet absorber (e).

**12.** The composition according to claim 1, further comprising a polyether-modified silicone compound (d).

**13.** A composition kit, comprising:

a first composition as the composition according to any one of claim 1 to claim 12; and

a second composition comprising a polymerizable compound that includes at least one selected from the group consisting of the polyiso(thio)cyanate compound (b2) and the polythiol compound (c2).

**14.** The composition kit according to claim 13, wherein the second composition comprises either the polyiso(thio)cyanate compound (b2) or the polythiol compound (c2).

**15.** A cured product of a mixture of the first composition and the second composition included in the composition kit according to claim 13.

**16.** The cured product according to claim 15, having a refractive index of from 1.50 to 1.80.

**17.** A laminate, comprising the cured product according to claim 15 and a substrate.

**18.** The laminate according to claim 17, further comprising a functional film.

**19.** The laminate according to claim 18, wherein the functional film comprises at least one selected from the group consisting of a polarizing film, a phase difference film, a gas barrier film, an electroconductive film, an insulating film

and a lightguide film.

20. The laminate according to claim 18, wherein the cured product is in direct contact with at least a portion of the functional film.

21. A method of producing a cured product, the method comprising:

obtaining a mixture of the first composition and the second composition included in the composition kit according to claim 13; and
applying ultraviolet rays or visible light to the mixture.

22. The method of producing a cured product according to claim 21, wherein the mixture is obtained using a two-component dispenser.

23. The method of producing a cured product according to claim 21, further comprising storing the composition kit at room temperature.

## INTERNATIONAL SEARCH REPORT

International application No.
**PCT/JP2024/008297**

### A. CLASSIFICATION OF SUBJECT MATTER

***C08G 18/38***(2006.01)i; ***B32B 7/023***(2019.01)i; ***C08G 18/08***(2006.01)i; ***C08K 3/38***(2006.01)i; ***C08K 5/17***(2006.01)i; ***C08K 5/524***(2006.01)i; ***C08L 75/04***(2006.01)i
FI: C08G18/38 076; B32B7/023; C08G18/08 038; C08K3/38; C08K5/17; C08K5/524; C08L75/04

According to International Patent Classification (IPC) or to both national classification and IPC

### B. FIELDS SEARCHED

Minimum documentation searched (classification system followed by classification symbols)

C08G18/38; B32B7/023; C08G18/08; C08K3/38; C08K5/17; C08K5/524; C08L75/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2010/032365 A1 (MITSUI CHEMICALS, INC.) 25 March 2010 (2010-03-25) claims, paragraphs [0058], [0060], examples | 1-6, 10-11, 15-16 |
| Y | | 12 |
| A | | 7-9, 13-14, 17-23 |
| X | CN 106947057 A (INSIGHT HIGH TECHNOLOGY (BEIJING) CO., LTD.) 14 July 2017 (2017-07-14) claims, examples | 1-5, 8-9, 15-17 |
| A | | 6-7, 10-14, 18-23 |
| X | JP 2008-513560 A (AKZO NOBEL COATINGS INTERNATIONAL B.V.) 01 May 2008 (2008-05-01) claims, paragraphs [0010], [0012], [0025], examples | 1-9, 11, 13-17, 21-23 |
| A | | 10, 12, 18-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

INTERNATIONAL SEARCH REPORT

International application No.
**PCT/JP2024/008297**

C. DOCUMENTS CONSIDERED TO BE RELEVANT

| Category* | Citation of document, with indication, where appropriate, of the relevant passages | Relevant to claim No. |
|---|---|---|
| X<br>A | JP 2003-535197 A (AKZO NOBEL N.V.) 25 November 2003 (2003-11-25) claims, paragraphs [0011], [0040], examples | 1-9, 11, 15-17<br>10, 12-14, 18-23 |
| Y | WO 2018/164194 A1 (MITSUI CHEMICALS, INC.) 13 September 2018 (2018-09-13) claims | 12 |

Form PCT/ISA/210 (second sheet) (July 2022)

**INTERNATIONAL SEARCH REPORT**
**Information on patent family members**

International application No.
**PCT/JP2024/008297**

| Patent document cited in search report | Publication date (day/month/year) | Patent family member(s) | Publication date (day/month/year) |
|---|---|---|---|
| WO 2010/032365 A1 | 25 March 2010 | US 2010/0075154 A1<br>claims, paragraphs [0086], [0088], examples<br>EP 2341091 A1<br>KR 10-2011-0044272 A<br>CN 102143984 A | |
| CN 106947057 A | 14 July 2017 | (Family: none) | |
| JP 2008-513560 A | 01 May 2008 | US 2008/0194720 A1<br>claims, paragraphs [0010], [0012], [0030], examples<br>EP 1789464 A1<br>CN 101044179 A<br>KR 10-2007-0058606 A | |
| JP 2003-535197 A | 25 November 2003 | US 2002/0032248 A1<br>claims, paragraphs [0015], [0051], examples<br>EP 1285012 A1<br>CN 1432031 A<br>KR 10-2003-0001477 A | |
| WO 2018/164194 A1 | 13 September 2018 | US 2020/0010665 A1<br>claims<br>EP 3594288 A1<br>KR 10-2019-0103466 A<br>CN 110325594 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019015922 A
- WO 2011055540 A
- WO 2016125736 A
- JP 2023041165 A